# EUROPEAN PATENT APPLICATION

(11) **EP 4 524 000 A1**
(43) Date of publication of application: **19.03.2025**
(21) Application number: 24189642.2
(22) Date of filing: 19.07.2024
(51) Int. Cl.: B62D 25/08, B60R 19/12, B60R 19/48

(54) **VEHICLE STRUCTURE**

(30) Priority: 15.09.2023 JP 2023150383
(71) Applicant: Suzuki Motor Corporation, Shizuoka 432-8611 (JP)
(72) Inventor: KAGEYAMA, Yoshitatsu, HAMAMATSU-SHI, 431-0201 (JP)
(74) Representative: Plasseraud IP

(57) **Abstract**

[Problem to be Solved] To efficiently absorb impact energy.

[Solution] A vehicle structure 1 comprises: a reinforcing member 20 supported by a first vehicle body structural member 31 and a second vehicle body structural member 32 separated from each other in a vehicle up-down direction in a front part or a rear part of a vehicle; and a sensor apparatus S attached to the reinforcing member 20. A difference in rigidity with respect to a vehicle width direction is imparted to the reinforcing member 20 of the vehicle structure 1.

## Description

### [Technical Field]

The present disclosure relates to a vehicle structure including a structure for arranging a sensor apparatus in a front part or a rear part of a vehicle.

### [Background Art]

In general, a front part or a rear part of a vehicle such as an automobile is provided with an outer panel such as a bumper or a grille constituting a design surface on the outer side of the vehicle, and a sensor apparatus which senses an exterior environment of the vehicle by using a camera, radar, ultrasonic waves, or the like may be arranged at the back surface side of the outer panel.

As an example of a vehicle structure having a structure for arranging a sensor apparatus at a front part or a rear part of a vehicle, a structure disclosed in Patent Literature 1 is known. The structure disclosed in Patent Literature 1 includes a bridging member which connects, in an up-down direction, a bumper beam and an upper bar arranged at varying heights in a front part of a vehicle, a first bracket fixed to a radar apparatus, and a second bracket which has an arm part connecting the first bracket and the bridging member and fixes the first bracket to the bridging member. Furthermore, in the structure disclosed in Patent Literature 1, when receiving external force, the arm part undergoes buckling deformation, thereby alleviating an impact due to the external force.

### [Citation List]

### [Patent Literature]

[Patent Literature 1] WO 2020/162201 A1

### [Summary of Invention]

### [Problem to be Solved by the Invention]

However, in the structure of Patent Literature 1, the impact is alleviated by local deformation of a leg part of the second bracket fixed to the bridging member connecting the bumper beam and the upper bar constituting a vehicle body structural member of the vehicle, and there is a possibility that impact energy cannot be fully consumed as deformation energy and the impact cannot be sufficiently absorbed.

Thus, the purpose of the present disclosure is to provide a vehicle structure having a structure capable of efficiently absorbing impact energy.

### [Means for Solving the Problem]

In order to achieve the above-described purpose, one aspect of the present disclosure provides a vehicle structure comprising: a reinforcing member supported by a first vehicle body structural member and a second vehicle body structural member separated from each other in a vehicle up-down direction in a front part or a rear part of a vehicle; and a sensor apparatus attached to the reinforcing member, characterized in that a difference in rigidity with respect to a vehicle width direction is imparted to the reinforcing member.

### [Advantageous Effect of Invention]

According to the one aspect of the present disclosure, a vehicle structure having a structure capable of efficiently absorbing impact energy can be provided.

### [Brief Description of Drawings]

[Figure 1] Figure 1 is a perspective view of a vehicle structure according to an embodiment of the present disclosure.
[Figure 2] Figure 2 is a plan view of the vehicle structure seen from the rear of the vehicle.
[Figure 3] Figure 3 is a cross-sectional view of the vehicle structure at an A-A line illustrated in Figure 2.
[Figure 4] Figure 4 is a front view of a reinforcing member of the vehicle structure.
[Figure 5] Figure 5 is an enlarged perspective view of a lower part of the reinforcing member seen from the front of the vehicle.
[Figure 6] Figure 6 is a cross-sectional view of the reinforcing member at a B-B line illustrated in Figure 4.
[Figure 7] Figure 7 is an enlarged perspective view of the lower part of the reinforcing member seen from the rear of the vehicle.
[Figure 8] Figure 8 is another enlarged perspective view of the lower part of the reinforcing member seen from the rear of the vehicle.
[Figure 9] Figure 9 is a perspective view of a lower support part (lower bracket) of the vehicle structure.
[Figure 10] Figure 10 is a plan view of the lower support part (lower bracket) seen from the front of the vehicle.
[Figure 11] Figure 11 is an enlarged view of a C part illustrated in Figure 3.
[Figure 12] Figure 12 is an enlarged perspective view including the lower support part (lower bracket) according to a modification.
[Figure 13] Figure 13 is a front view of the reinforcing member according to a modification seen from the front of the vehicle.

### [Mode for Carrying Out the Invention]

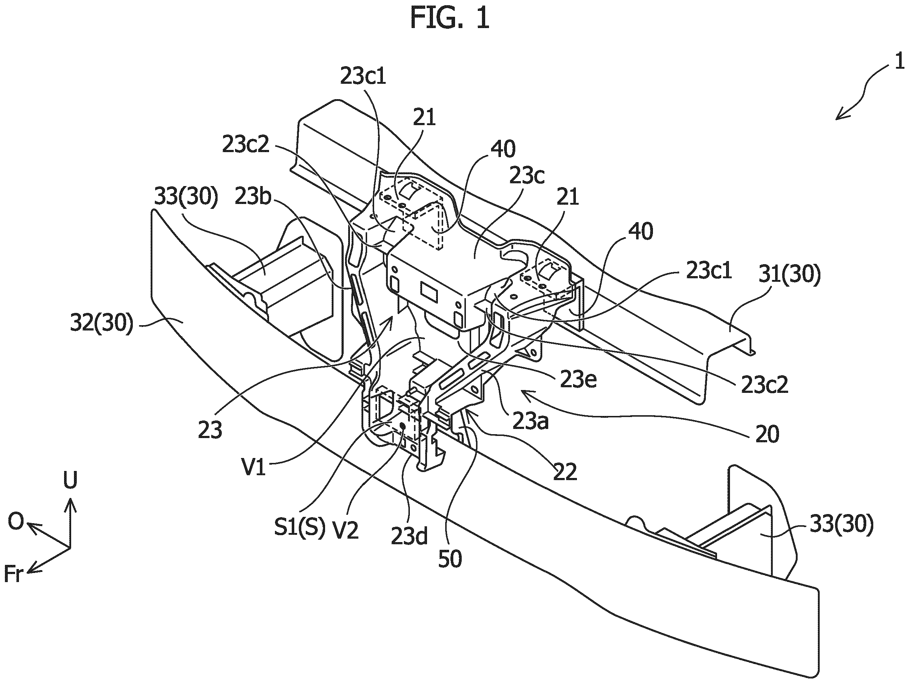

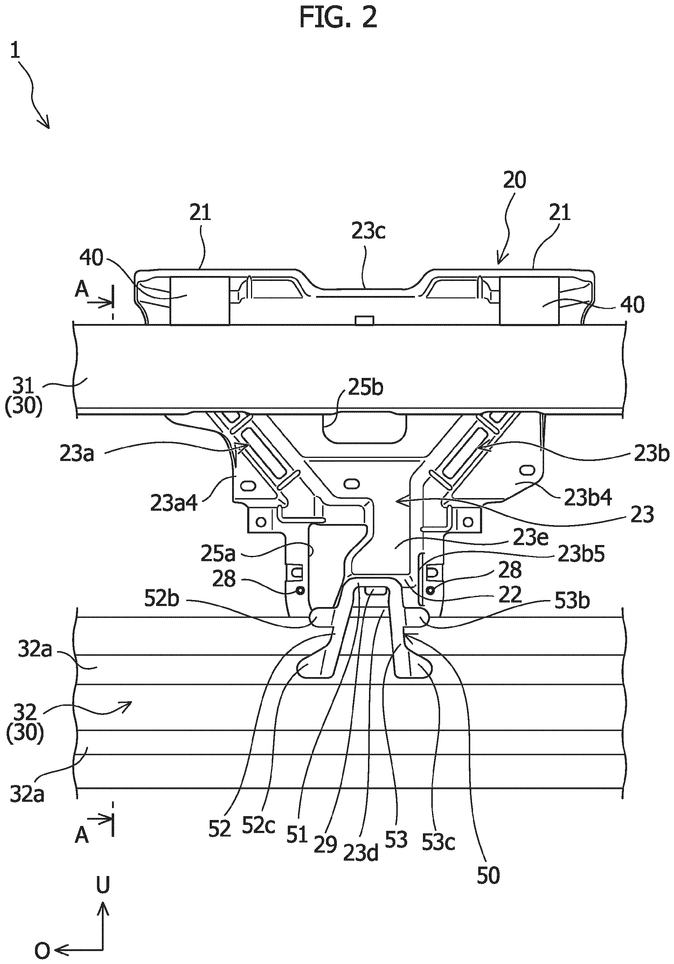

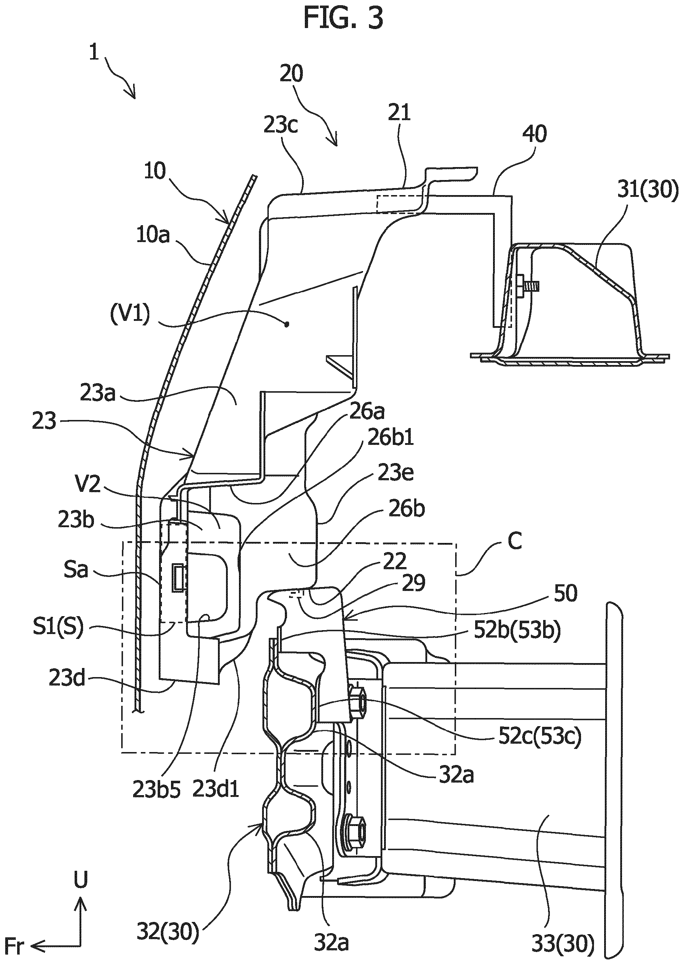

Hereinafter, embodiments of the present disclosure will be described by referring to the attached drawings. Figure 1 to Figure 3 are drawings for describing a vehicle structure 1 according to an embodiment of the present disclosure. Figure 1 is a perspective view of the vehicle structure 1 seen from the front of the vehicle, Figure 2 is a plan view (rear view) of the vehicle structure 1 seen from the rear of the vehicle, and Figure 3 is a cross-sectional view of the vehicle structure 1 at an A-A line illustrated in Figure 2. Note that, in the drawings, an arrow Fr direction represents the front of the vehicle in a vehicle front-rear direction, an arrow O direction represents the outside of the vehicle in a vehicle width direction (the outer side in the vehicle width direction), and an arrow U direction represents the upside of the vehicle in a vehicle up-down direction. In the following descriptions, "front" and "rear" correspond to front and rear in the vehicle front-rear direction, and "up" and "down" correspond to up and down in the vehicle up-down direction. In addition, "left" and "right" correspond to left and right in the vehicle width direction when seen from the front side of the vehicle toward the rear side of the vehicle.

### (Overview of Vehicle Structure)

As illustrated in Figure 1 to Figure 3, the vehicle structure 1 includes a structure for arranging, on the back surface side of an outer panel 10 of a vehicle, a sensor apparatus S which senses (detects) an exterior environment of the vehicle. In the present embodiment, the vehicle structure 1 also includes a structure for reinforcing the outer panel 10 and attaching (fixing) the outer panel 10 to the vehicle body side. In the present embodiment, the vehicle structure 1 is applied as a front part structure of the vehicle.

When referring to Figure 1 to Figure 3, in the present embodiment, the vehicle structure 1 includes the outer panel 10 (refer to Figure 3), a reinforcing member 20, the sensor apparatus S, and a vehicle body structural member 30. Note that the outer panel 10 is removed in Figure 1 and Figure 2.

The outer panel 10 is a member constituting a design surface of the outer side of the vehicle, which extends in the vehicle width direction. In the present embodiment, the outer panel 10 is a front bumper constituting the design surface of the outer side in a front part of the vehicle. The outer panel 10, which is the front bumper, has a bumper front surface part 10a extending in the entire vehicle width direction, for example. Although not illustrated, a front grille made of resin is provided at the center of the bumper front surface part 10a, and a plurality of vent holes are open in the front grille. That is to say, the outer panel 10 has the front grille which is an air intake member.

The reinforcing member 20 is a member for reinforcing the outer panel 10 from its back surface side, and fixing the outer panel 10 to a vehicle body (the vehicle body structural member 30). The reinforcing member 20 generally extends in the vehicle up-down direction, along a central part in the vehicle width direction on the back surface of the outer panel 10. Since the outer panel 10 is a large panel that is thin and spreading in a wide range in the vehicle width direction, its rigidity is relatively low. The reinforcing member 20 supports the outer panel 10 at a plurality of places from the back surface of the outer panel 10 to reinforce the outer panel 10 of a low rigidity. As will be described later, the reinforcing member 20 is coupled (fixed) to the vehicle body (vehicle body structural member 30) at a plurality of places, and is supported by the vehicle body structural member 30 (in detail, a first vehicle body structural member 31 and a second vehicle body structural member 32, described later). The reinforcing member 20 is coupled (fixed) to the back surface of the outer panel 10 at a plurality of places, thereby supporting the outer panel 10 from the back surface side. Note that the structure of the reinforcing member 20 will be described later.

The sensor apparatus S is attached to the reinforcing member 20. The sensor apparatus S is an apparatus that is attached to the reinforcing member 20 and senses the exterior environment of the vehicle. In the present embodiment, the sensor apparatus S is an apparatus that is configured to sense an obstacle (obstacle in the exterior of the vehicle), such as another vehicle positioned in front of the vehicle, by using an electromagnetic wave. In the present embodiment, the sensor apparatus S uses a millimeter wave as the electromagnetic wave. That is to say, the sensor apparatus S is a millimeter wave radar. However, the electromagnetic wave used in the sensor apparatus S is not limited to millimeter waves, and it may be microwaves, for example.

In the present embodiment, a plurality of (for example, two) sensor apparatuses are attached to the reinforcing member 20 as the sensor apparatus S. In the illustrated example, a brief outer shape of an object sensor apparatus S1, which is one of the plurality of sensor apparatuses, is illustrated with a broken line, and another sensor apparatus is not illustrated.

The sensor apparatus S including the object sensor apparatus S1 has a sensor outer surface Sa facing the outer side of the vehicle (here, the front of the vehicle) with respect to the vehicle front-rear direction, and an electromagnetic wave is output from, or is input to, the sensor outer surface Sa. The sensor apparatus S is attached, at the rear of the front grille of the outer panel 10, at generally the center in the vehicle width direction of the reinforcing member 20 in an orientation in which the sensor outer surface Sa is made to face the front of the vehicle, through a coupling tool such as a sensor support plate or bolt, not illustrated, and is fixed to the reinforcing member 20. In this state, the sensor apparatus S opposes the back surface of the outer panel 10. A region (portion) opposing the sensor apparatus S in the outer panel 10 is made of a material (for example, synthetic resin or the like) having a characteristic allowing transmission of an electromagnetic wave, and is formed in a flat tabular shape as a sensing (detection) wave passing region (electromagnetic wave passing part).

The sensor apparatus S outputs an electromagnetic wave, and the output electromagnetic wave passes the sensing wave passing region of the outer panel 10 and is output to the front of the vehicle. Furthermore, when there is an obstacle at the front of the vehicle, the electromagnetic wave output to the front of the vehicle is reflected by the obstacle, and the sensor apparatus S is configured to receive the electromagnetic wave reflected by the obstacle and passed the sensing wave passing region to sense (detect) the obstacle at the front of the vehicle.

The vehicle body structural member 30 is a member of high rigidity constituting a structural member of the vehicle body. In the front part of the vehicle, the first vehicle body structural member 31, the second vehicle body structural member 32, a pair of front side members 33, 33, and the like are provided as the vehicle body structural member 30. That is to say, each element (31, 32, 33) constitutes a part of the vehicle body structural member 30 of the vehicle. Furthermore, each element (31, 32, 33) is made of a thin metal plate or the like.

The first vehicle body structural member 31 and the second vehicle body structural member 32 are separated from each other in the vehicle up-down direction in the front part of the vehicle, and the first vehicle body structural member 31 and the second vehicle body structural member 32 each extends in the vehicle width direction. The pair of front side members 33, 33 are separated from each other in the vehicle width direction in a lower part of the vehicle, and each front side member 33 extends in the front-rear direction.

In the present embodiment, the first vehicle body structural member 31 is provided on the upside relative to the second vehicle body structural member 32 with respect to the vehicle up-down direction, and it may also be referred to as an upper side cross member or an upper bumper beam. The first vehicle body structural member 31 is also a hood lock member as a structural member receiving a front part of a front hood, not illustrated. Each end part of the first vehicle body structural member 31 is joined to another member, not illustrated, of the vehicle body structural member 30. The second vehicle body structural member 32 is provided on the downside relative to the first vehicle body structural member 31 with respect to the vehicle up-down direction, and it may also be referred to as a lower side cross member or a lower bumper beam. One end of the second vehicle body structural member 32 is joined to the front end of one of the front side members 33, and the other end of the second vehicle body structural member 32 is joined to the front end of the other front side member 33.

### (Detail of Vehicle Structure)

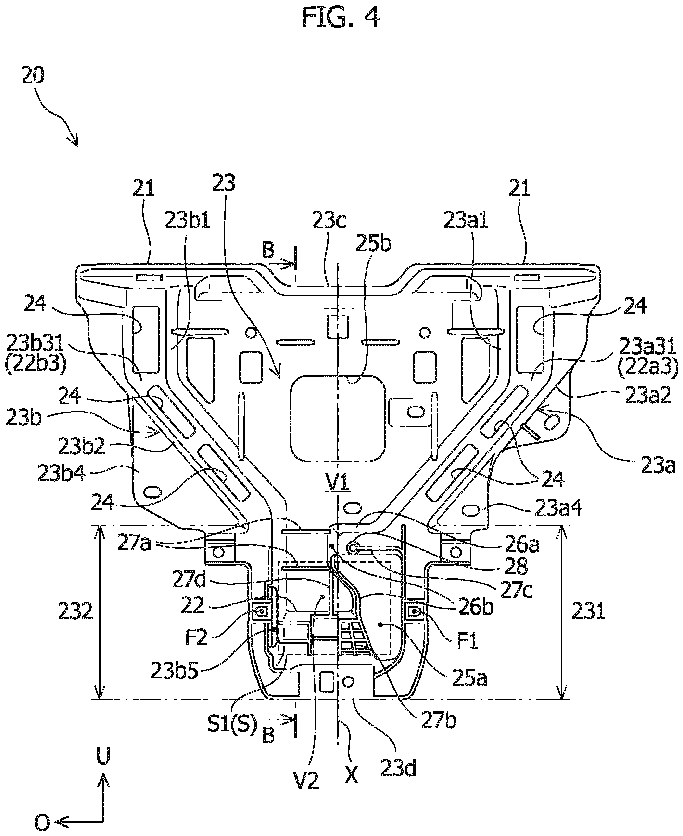

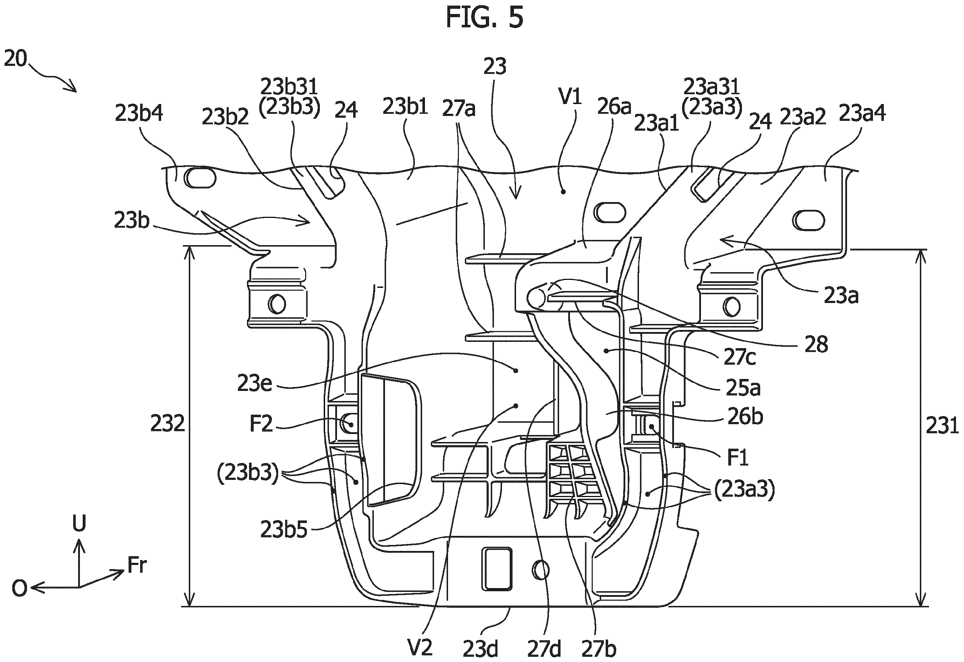

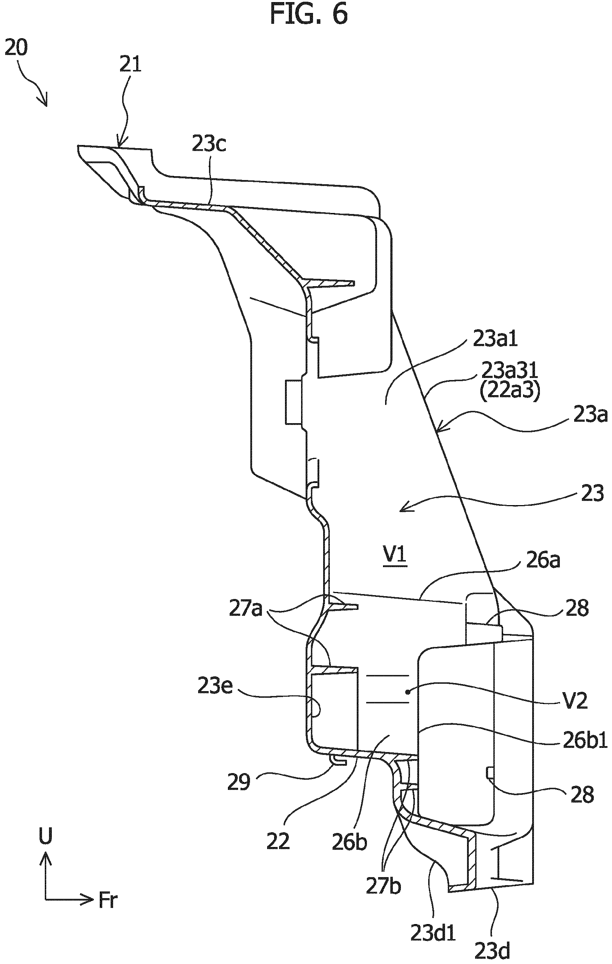

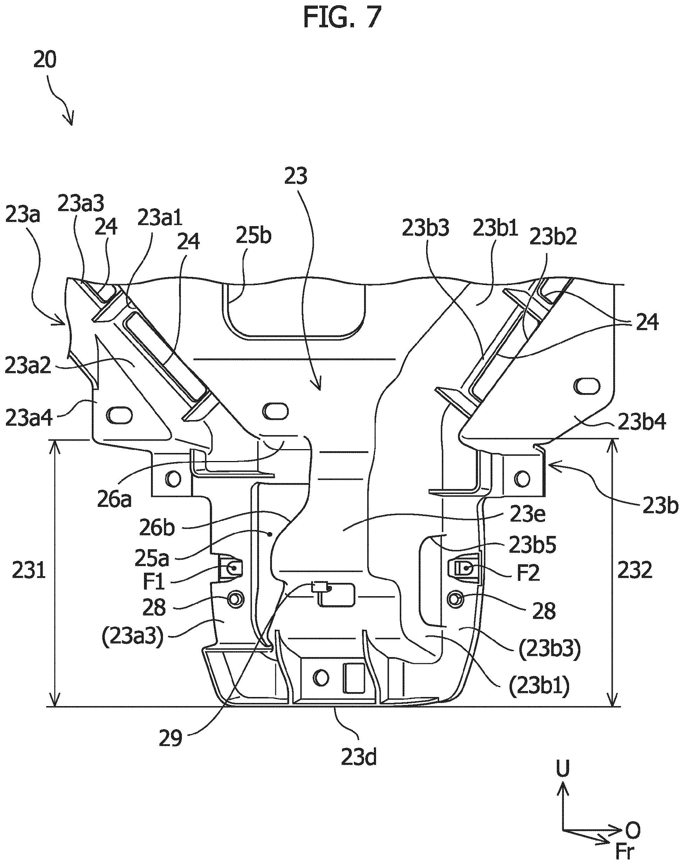

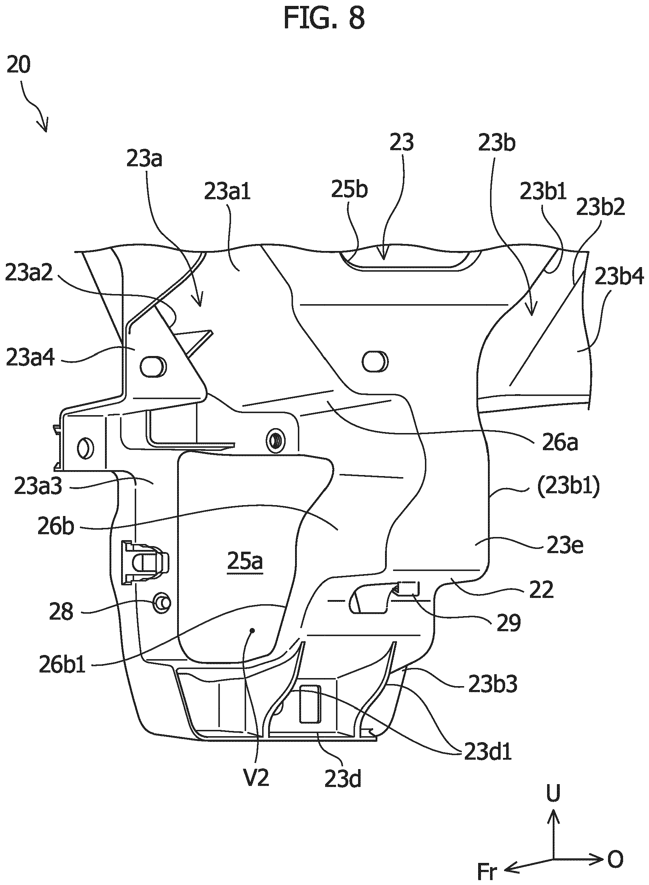

Hereinafter, the vehicle structure 1 will be described in detail by referring to Figure 1 to Figure 8. Figure 4 to Figure 8 are drawings for describing the reinforcing member 20. Figure 4 is a front view of the reinforcing member 20 seen from the front of the vehicle, Figure 5 is an enlarged perspective view of a lower part of the reinforcing member 20 seen from the front of the vehicle, Figure 6 is a cross-sectional view of the reinforcing member 20 at a B-B line illustrated in Figure 4, Figure 7 is an enlarged perspective view of the lower part of the reinforcing member 20 seen from the rear of the vehicle, and Figure 8 is an enlarged perspective view of the lower part of the reinforcing member 20 seen from the rear of the vehicle at a different angle from Figure 7.

When referring to Figure 1 to Figure 3, the reinforcing member 20 is supported by the first vehicle body structural member 31 and the second vehicle body structural member 32, which are separated from each other in the vehicle up-down direction in the front part of the vehicle.

In the present embodiment, the second vehicle body structural member 32 is positioned on the downside relative to the first vehicle body structural member 31 with respect to the vehicle up-down direction, as mentioned above. In addition, in the present embodiment, the second vehicle body structural member 32 is provided at a position offset to the outer side of the vehicle (here, the front of the vehicle) with respect to the vehicle front-rear direction relative to the first vehicle body structural member 31. That is to say, the second vehicle body structural member 32 is positioned at the front and on the downside relative to the first vehicle body structural member 31.

The reinforcing member 20 is, for example, an injection molded article made of resin. In a front view, the reinforcing member 20 has an inverted trapezoid-like outer shape in which an upper base is generally longer than a lower base, and in a lateral view, the reinforcing member 20 protrudes to the outer side of the vehicle (here, the front of the vehicle) with respect to the vehicle front-rear direction from the first vehicle body structural member 31 and then is bent so as to extend to the downside toward the second vehicle body structural member 32. The reinforcing member 20 is formed generally along the bumper front surface part 10a in a central part in the vehicle width direction of the back surface of the outer panel 10. In other words, the reinforcing member 20 is a member extending from the first vehicle body structural member 31 to the second vehicle body structural member 32, and connecting the first vehicle body structural member 31 and the second vehicle body structural member 32.

The reinforcing member 20 has first vehicle body coupling parts 21 to be coupled to (supported by) the first vehicle body structural member 31, and a second vehicle body coupling part 22 to be coupled to (supported by) the second vehicle body structural member 32. The first vehicle body coupling parts 21 are provided on both sides in the vehicle width direction at an upper part of the reinforcing member 20, and the second vehicle body coupling part 22 is provided at the lower part of the reinforcing member 20.

In the present embodiment, the first vehicle body structural member 31 is provided with a plurality of (here, two) upper support parts 40 projecting to the upside from the first vehicle body structural member 31 and supporting the upper part of the reinforcing member 20 from the downside. The second vehicle body structural member 32 is provided with a lower support part 50 projecting to the upside from the second vehicle body structural member 32 and supporting the lower part of the reinforcing member 20 from the downside.

The two upper support parts 40 are provided, in the first vehicle body structural member 31, at positions with an interval from each other in the vehicle width direction. Furthermore, the upper support parts 40 and the lower support part 50 are each a member made by bending a thin metal plate. That is to say, in the present embodiment, each upper support part 40 is a member (upper bracket) formed by being physically separated from the first vehicle body structural member 31, and the lower support part 50 is also a member (lower bracket) formed by being physically separated from the second vehicle body structural member 32. Furthermore, the upper support part 40 is joined to the first vehicle body structural member 31, and the lower support part 50 is joined to the second vehicle body structural member 32.

The first vehicle body coupling parts 21 in the upper part of the reinforcing member 20 are coupled to (supported by) the first vehicle body structural member 31 by being coupled (fastened) to the upper support part 40 with a coupling tool such as a bolt, and the second vehicle body coupling part 22 in the lower part of the reinforcing member 20 is coupled to (supported by) the second vehicle body structural member 32 by being locked to the lower support part 50. Note that the shape of the lower support part 50 (lower bracket) and the structure of the second vehicle body coupling part 22 will be described in detail later.

Next, mainly the shape, the structure, and the like of main parts of the reinforcing member 20 will be further described in detail.

With reference to Figure 1 to Figure 8, a difference in rigidity with respect to the vehicle width direction is imparted to the reinforcing member 20. At the time of a front collision and the like, a load (impact load) due to external force acting on the outer panel 10 is likely to be input to the reinforcing member 20 mainly from the front of the reinforcing member 20 with respect to the vehicle front-rear direction. Furthermore, in the reinforcing member 20, the rigidity against a load in the vehicle front-rear direction differs along the vehicle width direction. Specifically, the difference in rigidity with respect to the vehicle width direction is imparted to a partial range with respect to the vehicle up-down direction of the reinforcing member 20, in the illustrated example, to a lower part occupying a predetermined range from the lower end to the upside.

In the present embodiment, the reinforcing member 20 has a containing part 23 which is recessed to the inner side of the vehicle with respect to the vehicle front-rear direction and in which the sensor apparatus S is contained. The containing part 23 has a recessed shape which is recessed to the inner side of the vehicle (here, the rear of the vehicle) and open to the outer side of the vehicle (the front of the vehicle), and a containing space to contain the sensor apparatus S is formed on the inner side of the recessed shape. In other words, overall, the containing part 23 is formed generally in a recessed shape that is open to the front of the vehicle (and bulging to the rear of the vehicle).

The containing part 23 has a first lateral part 23a, a second lateral part 23b, an upper connection wall 23c, a lower connection wall 23d, and a bottom wall 23e, and the containing space is defined by these elements. The first lateral part 23a, the second lateral part 23b, the upper connection wall 23c, and the lower connection wall 23d constitute outer edges of the reinforcing member 20 in a planar view seen from one side of the vehicle front-rear direction.

The first lateral part 23a is a lateral part on one side of the containing part 23 in the vehicle width direction, and the second lateral part 23b is a lateral part on the other side of the containing part 23 in the vehicle width direction. The first lateral part 23a and the second lateral part 23b each extends generally in the vehicle up-down direction. In the illustrated example, the first lateral part 23a extends from one of the first vehicle body coupling parts 21 in the upper part of the reinforcing member 20 to the lower end of the reinforcing member 20, and the second lateral part 23b extends from the other first vehicle body coupling part 21 in the upper part of the reinforcing member 20 to the lower end of the reinforcing member 20. These first lateral part 23a and second lateral part 23b are sites in which the object sensor apparatus S1 is positioned and attached, as will be described later. With each of the first lateral part 23a and the second lateral part 23b, which is the positioning (attachment) site of the object sensor apparatus S1, extending from the first vehicle body coupling part 21, a support rigidity of the object sensor apparatus S1 at the time of ordinary use which is unaffected by external force is ensured.

When referring to Figure 1, Figure 2, Figure 4, and the like, in the illustrated example, a large portion of the first lateral part 23a and a large portion of the second lateral part 23b are each formed in a shape having a bulging structure that bulges to the outer side of the vehicle (front of the vehicle).

The first lateral part 23a has a first inner wall 23a1 and a first outer wall 23a2 which are separated from each other in the vehicle width direction, and a first end wall 23a3 having an outer surface 23a31 facing the outer side of the vehicle (the front of the vehicle) with respect to the vehicle front-rear direction. The first end wall 23a3 extends from one end of the upper connection wall 23c to one end of the lower connection wall 23d, and connects the front end of the first inner wall 23a1 and the front end of the first outer wall 23a2. Similarly, the second lateral part 23b has a second inner wall 23b1 and a second outer wall 23b2 which are separated from each other in the vehicle width direction, and a second end wall 23b3 having an outer surface 23b31 facing the outer side of the vehicle (front of the vehicle) with respect to the vehicle front-rear direction. The second end wall 23b3 extends from the other end of the upper connection wall 23c to the other end of the lower connection wall 23d, and connects the front end of the second inner wall 23b1 and the front end of the second outer wall 23b2. That is to say, in the present embodiment, the first lateral part 23a and the second lateral part 23b each has the outer surface (23a31, 23b31) facing the outer side of the vehicle with respect to the vehicle front-rear direction.

The upper connection wall 23c connects the upper end of the first lateral part 23a and the upper end of the second lateral part 23b. When referring to Figure 1, a connection portion with the upper end of the first lateral part 23a in the upper connection wall 23c is depressed to the inner side of the vehicle (here, the rear of the vehicle), and similarly, a connection portion with the upper end of the second lateral part 23b in the upper connection wall 23c is also depressed to the inner side of the vehicle (here, the rear of the vehicle). In this manner, with a depression 23c1 being formed in the upper connection wall 23c, the containing part 23 is likely to be displaced relative to the first vehicle body coupling part 21 in an upper part of the first lateral part 23a and the first vehicle body coupling part 21 in an upper part of the second lateral part 23b. However, a rib 23c2 is formed in each depression 23c1, and since the upper end of the first lateral part 23a and the upper connection wall 23c are coupled with the rib 23c2 and the upper end of the second lateral part 23b and the upper connection wall 23c are coupled with the rib 23c2, displacement (hanging down and the like) of the outer panel 10 from an intended position is reduced, and it becomes easy to maintain attachment accuracy of the sensor apparatus S.

The lower connection wall 23d connects the lower end of the first lateral part 23a and the lower end of the second lateral part 23b.

The bottom wall 23e is a wall (in the illustrated example, this can also be referred to as a rear wall) forming the bottom of the recess with respect to the vehicle front-rear direction in the containing part 23. The first lateral part 23a, the second lateral part 23b, the upper connection wall 23c, and the lower connection wall 23d are each connected to a peripheral edge of the bottom wall 23e.

In this regard, when referring to Figure 4, the containing space of the containing part 23 consists of an upper containing space V1 having an inverted trapezoid shape in which an upper base is generally longer than a lower base in a planar view seen from the front of the vehicle and a lower containing space V2 having a generally square shape in a planar view seen from the front of the vehicle. The lower containing space V2 communicates with the upper containing space V1 from the downside.

In a planar view seen from the front of the vehicle, the first lateral part 23a linearly extends to the downside from one of the first vehicle body coupling parts 21 (the one end of the upper connection wall 23c) and then is inclined so as to approach the inner side in the vehicle width direction in a portion corresponding to the upper containing space V1, while it linearly extends to the downside to one end of the lower connection wall 23d in a portion corresponding to the lower containing space V2. Similarly, the second lateral part 23b linearly extends to the downside from the other first vehicle body coupling part 21 (the other end of the upper connection wall 23c) and then is inclined so as to approach the inner side in the vehicle width direction in the portion corresponding to the upper containing space V1, while it linearly extends to the downside to the other end of the lower connection wall 23d in the portion corresponding to the lower containing space V2. In other words, the containing part 23 has an inclined widened part that widens in the vehicle width direction toward the upside at an upside position relative to the object sensor apparatus S1.

The lower containing space V2 is a space surrounded by a second vehicle body structural member-side portion (in the illustrated example, the lower part) of the first lateral part 23a, a second vehicle body structural member-side portion (the lower part) of the second lateral part 23b, the lower connection wall 23d, and a second vehicle body structural member-side portion (the lower part) of the bottom wall 23e. In other words, the lower containing space V2 is provided between the second vehicle body structural member-side portion of the first lateral part 23a and the second vehicle body structural member-side portion of the second lateral part 23b.

The second vehicle body structural member-side portion of the first lateral part 23a is a portion of the first lateral part 23a that forms (defines) the lower containing space V2, and in the following, is referred to as a first lower lateral part 231 as appropriate. Similarly, the second vehicle body structural member-side portion of the second lateral part 23b is a portion of the second lateral part 23b that forms (defines) the lower containing space V2, and in the following, is referred to as a second lower lateral part 232 as appropriate. Furthermore, the first lower lateral part 231 is a portion of the first lateral part 23a that is adjacent to the lower containing space V2, and the second lower lateral part 232 is a portion of the second lateral part 23b that is adjacent to the lower containing space V2.

The another sensor apparatus, not illustrated, which is one of the sensor apparatuses S, is arranged in the upper containing space V1, and the object sensor apparatus S1 mentioned above, which is one of the sensor apparatuses S, is arranged in the lower containing space V2.

Accordingly, in the present embodiment, the sensor apparatus S includes the object sensor apparatus S1 arranged between the second vehicle body structural member-side portion (the first lower lateral part 231) of the first lateral part 23a and the second vehicle body structural member-side portion (the second lower lateral part 232) of the second lateral part 23b. The first lower lateral part 231 opposes one lateral part of the object sensor apparatus S1, and the second lower lateral part 232 opposes the other lateral part of the object sensor apparatus S1.

### (Difference in Rigidity of Lateral parts)

In the present embodiment, the difference in rigidity with respect to the vehicle width direction imparted to the reinforcing member 20 includes a difference in rigidity of the lateral parts, which is a difference between the rigidity of the first lateral part 23a of the containing part 23 and the rigidity of the second lateral part 23b of the containing part 23. In the present embodiment, the difference in rigidity of the lateral parts is imparted between the rigidity of the second vehicle body structural member-side portion (in the illustrated example, the first lower lateral part 231) of the first lateral part 23a and the rigidity of the second vehicle body structural member-side portion (in the illustrated example, the second lower lateral part 232) of the second lateral part 23b. Specifically, the difference in rigidity of the lateral parts is a difference between the rigidity against a load in the vehicle front-rear direction of the first lower lateral part 231 and the rigidity against a load in the vehicle front-rear direction of the second lower lateral part 232.

In the present embodiment, the second vehicle body structural member-side portion (the first lower lateral part 231) of the first lateral part 23a is formed to have a lower rigidity than the second vehicle body structural member-side portion (the second lower lateral part 232) of the second lateral part 23b.

Specifically, when referring to Figure 5 to Figure 8, in the first lateral part 23a, the first inner wall 23a1 and the first outer wall 23a2 are formed in the portion corresponding to the upper containing space V1, but are not formed in the portion corresponding to the lower containing space V2 (that is to say, the first lower lateral part 231). Accordingly, the first lower lateral part 231 mainly consists of the first end wall 23a3. Furthermore, in the second lateral part 23b, the second inner wall 23b1 is formed in the portion corresponding to the upper containing space V1 and the portion corresponding to the lower containing space V2 (that is to say, the second lower lateral part 232), and is continuously extended from the other end of the upper connection wall 23c to the other end of the lower connection wall 23d, while the second outer wall 23b2 is formed in the portion corresponding to the upper containing space V1 and is not formed in the second lower lateral part 232. Accordingly, the second lower lateral part 232 mainly consists of the second end wall 23b3 and the second inner wall 23b1. That is to say, in the first lower lateral part 231, the first inner wall 23a1 and the first outer wall 23a2 corresponding to the second inner wall 23b1 in the second lower lateral part 232 are omitted, and in the second lower lateral part 232, the second outer wall 23b2 is omitted. In the present embodiment, a length (thickness) of the first lower lateral part 231 in the vehicle front-rear direction is made remarkably shorter (thinner) than a length (thickness) of the second lower lateral part 232 in the vehicle front-rear direction. In this manner, by providing variation between the shape of the first lower lateral part 231 of the first lateral part 23a and the shape of the second lower lateral part 232 of the second lateral part 23b, the rigidity against a load in the front-rear direction of the first lower lateral part 231 of the first lateral part 23a is made lower than the rigidity against the load in the front-rear direction of the second lower lateral part 232 of the second lateral part 23b. That is to say, the difference in rigidity of the lateral parts is imparted between the rigidity of the first lower lateral part 231 of the first lateral part 23a and the rigidity of the second lower lateral part 232 of the second lateral part 23b.

Moreover, when referring to Figure 2 and Figure 4, the first lateral part 23a has a first flange 23a4 protruding to the outer side in the vehicle width direction from a lower part of the first outer wall 23a2, and the second lateral part 23b has a second flange 23b4 protruding to the outer side in the vehicle width direction from a lower part of the second outer wall 23b2. Each flange (23a4, 23b4) is coupled to the outer panel 10 through a coupling tool or the like as appropriate. Furthermore, the size (area) of the first flange 23a4 of the first lateral part 23a on the low rigidity side is smaller than the size (area) of the second flange 23b4 of the second lateral part 23b on the high rigidity side. That is to say, in the illustrated example, the difference in rigidity of the lateral parts is imparted also by a variation in the sizes of the flanges of panel coupling parts (the first flange 23a4 and the second flange 23b4), which are parts coupled to the outer panel 10.

In the present embodiment, the object sensor apparatus S1 is arranged inside the containing part 23 such that the sensor outer surface Sa is positioned on the same plane as the outer surfaces (23a31, 23b31) of the first lateral part 23a and the second lateral part 23b with respect to the vehicle front-rear direction. In the illustrated example, each of both edge parts in the vehicle width direction of the first end wall 23a3 of the first lateral part 23a is slightly projected to the front of the vehicle and extended in the vehicle up-down direction in the first lower lateral part 231, and similarly, each of both edge parts in the vehicle width direction of the second end wall 23b3 of the second lateral part 23b is slightly projected to the front of the vehicle and extended in the vehicle up-down direction in the second lower lateral part 232. Accordingly, in the illustrated example, the outer surfaces (23a31, 23b31) facing the front of the vehicle include tip surfaces of projecting parts which project to the front from both edge parts of the end walls (23a3, 23b3), in the lower lateral parts (231, 232). In the present embodiment, for example, the object sensor apparatus S1 is arranged inside the containing part 23 such that the tip surfaces, which are portions of the outer surfaces (23a31, 23b31), are positioned on the same plane as the sensor outer surface Sa of the object sensor apparatus S1. Accordingly, the object sensor apparatus S1 is not protruded to the front of the vehicle relative to the front surface of the reinforcing member 20.

In the present embodiment, in at least one of the outer surface 23a31 of the first lateral part 23a and the outer surface 23b31 of the second lateral part 23b, long holes 24 which are vertically long are formed at positions offset relative to the object sensor apparatus S1 with respect to the vehicle up-down direction. In the present embodiment, the long holes 24 are open in both the first lateral part 23a and the second lateral part 23b. In other words, the long holes 24 are open on the front surfaces of the first lateral part 23a and the second lateral part 23b in the inclined widened part of the containing part 23.

Specifically, in the illustrated example, in the portion of the first lateral part 23a that corresponds to the upper containing space V1, the long holes 24 are open at three places having an interval from each other in the first end wall 23a3, and in the portion of the second lateral part 23b that corresponds to the upper containing space V1, the long holes 24 are open at three places having an interval from each other in the second end wall 23b3. Furthermore, in the illustrated example, the long holes 24 on the first end wall 23a3 are formed to have the same size, shape, and interval as those of the long holes 24 on the second end wall 23b3.

### (Difference in Rigidity of Bottom Wall)

In the present embodiment, on the bottom wall 23e of the containing part 23, an opening 25a (hereinafter, referred to as the first opening 25a as appropriate) is formed in a region that is positioned between the second vehicle body structural member-side portion of the first lateral part 23a (in the illustrated example, the first lower lateral part 231) and the second vehicle body structural member-side portion of the second lateral part 23b (in the illustrated example, the second lower lateral part 232) with respect to the vehicle up-down direction and that is shifted to the first lateral part 23a side, which is the low rigidity side, with respect to the vehicle width direction. Accordingly, in the present embodiment, the difference in rigidity with respect to the vehicle width direction imparted to the reinforcing member 20 includes a difference in rigidity of the bottom wall, which is caused due to formation of the first opening 25a on the bottom wall 23e of the containing part 23. That is to say, the rigidity against a load in the vehicle front-rear direction varies in the vehicle width direction also in the bottom wall 23e.

Specifically, in the illustrated example, the first opening 25a is open in the region on the low rigidity side (the first lateral part 23a side) in the portion of the bottom wall 23e that corresponds to the lower containing space V2. In the illustrated example, as described above, in order to achieve a low rigidity with respect to the first lower lateral part 231 of the first lateral part 23a, the first inner wall 23a1 and the first outer wall 23a2 are omitted in the first lower lateral part 231 of the first lateral part 23a. As a result, in the illustrated example, the first opening 25a can be visually recognized as being formed as a notch that is notched from an edge on the low rigidity side (the first lateral part 23a side) toward the high rigidity side (the second lateral part 23b side), on the bottom wall 23e.

In addition, in the illustrated example, a second opening 25b is formed on the bottom wall 23e separately from the first opening 25a. The second opening 25b is open at the center in the vehicle width direction, in the portion of the bottom wall 23e that corresponds to the upper containing space V1. With the second opening 25b being formed on the bottom wall 23e, deformation of the containing part 23 at the time of front collision and the like can be further effectively promoted.

In the present embodiment, in the reinforcing member 20, the rigidity in a periphery of the first opening 25a is improved to ensure the support rigidity of the object sensor apparatus S1 at the time of ordinary use. Specifically, in the present embodiment, the reinforcing member 20 has an intermediate connection wall 26a and a vertical connection wall 26b.

The intermediate connection wall 26a is positioned on the upside of the object sensor apparatus S1, and it connects the bottom wall 23e and an upper part of the second vehicle body structural member-side portion (the first lower lateral part 231) of the first lateral part 23a. The intermediate connection wall 26a extends in the vehicle front-rear direction and the vehicle width direction. Furthermore, the vertical connection wall 26b is positioned at the rear of the object sensor apparatus S1, and it connects an inner side end in the vehicle width direction of the intermediate connection wall 26a and one end of the lower connection wall 23d. The vertical connection wall 26b extends in the vehicle front-rear direction, and is curved so as to approach the high rigidity side toward the upside in a region corresponding to an opening edge of the first opening 25a. As a result, a lower part of the bottom wall 23e (the back wall) extends to the low rigidity side and is connected to the lower connection wall 23d. With such configuration, the reinforcing member 20 promotes deformation and displacement on the low rigidity side at the time of a front collision and the like, whereas the weights of the outer panel 10 and the like are likely to be received by the lower connection wall 23d through the vertical connection wall 26 extending to the low rigidity side and the lower part of the bottom wall 23e.

In addition, in the illustrated example, the intermediate connection wall 26a connects the bottom wall 23e and the first lateral part 23a (the first end wall 23a3) along an upper edge of the first opening 25a formed as a notch on the bottom wall 23e. Furthermore, the vertical connection wall 26b connects the bottom wall 23e, the intermediate connection wall 26a, and the lower connection wall 23d along a side edge of the first opening 25a on the second lateral part 23b side. In this manner, in the reinforcing member 20, the difference in rigidity of the bottom wall is caused by the first opening 25a, while improvement in the rigidity of the periphery of the first opening 25a is achieved by the intermediate connection wall 26a and the vertical connection wall 26b.

### (Periphery Structure of Sensor Apparatus)

When referring to Figure 5, a plurality of (here, two) bridging ribs 27a and a grid structure part 27b are formed on the bottom wall 23e of the reinforcing member 20. The bridging rib 27a extends in the vehicle width direction so as to connect the vertical connection wall 26b and the second inner wall 23b1 of the second lateral part 23b. In the illustrated example, the bridging rib 27a on the upper side among the two bridging ribs 27a can also be recognized as connecting an end part of the intermediate connection wall 26a and the second inner wall 23b1. The grid structure part 27b is connected along a lower part of an inner wall of the vertical connection wall 26b. The grid structure part 27b is made of a plurality of ribs vertically and horizontally extending in a grid shape, and it constitutes a plurality of closed cross-section structures.

When referring to Figure 5 to Figure 8, the reinforcing member 20 has a plurality of (here, three) positioning projections 28 for arranging the object sensor apparatus S1 at a predetermined position of the lower containing space V2. The positioning projections 28 are provided on, for example, the rear surface of the first end wall 23a3, the rear surface of the second end wall 23b3, and the front surface of the flange extending to the downside from the intermediate connection wall 26a. A sensor support plate not illustrated is fixed on the rear surface of the object sensor apparatus S1. This sensor support plate is positioned relative to the containing part 23 by the three positioning projections 28 and is fixed (fastened) against the containing part 23 with a coupling tool such as a bolt, thereby attaching the object sensor apparatus S 1 to the reinforcing member 20 in a predetermined orientation at a predetermined position of the lower containing space V2.

When referring to Figure 4 and Figure 5, fixed points (F1, F2) of the sensor support plate (the object sensor apparatus S1) against the containing part 23 are provided on the first end wall 23a3 and the second end wall 23b3. The fixed point F1 of the first end wall 23a3 is positioned in the vicinity of the positioning projection 28 on the first end wall 23a3, and the fixed point F2 of the second end wall 23b3 is positioned in the vicinity of the positioning projection 28 on the second end wall 23b3. In this manner, the object sensor apparatus S1 is fixed to the first end wall 23a3 and the second end wall 23b3 through the sensor support plate, and the object sensor apparatus S1 and the sensor support plate also function as a beam for coupling the first end wall 23a3 and the second end wall 23b3. Note that the positioning projection 28 may also be used as a fixed point (fixed place) in which the object sensor apparatus S1 is fixed.

In addition, since the rigidity of the vertical connection wall 26b is enhanced by the grid structure part 27b, the support rigidity of the intermediate connection wall 26a supported by the vertical connection wall 26b is also enhanced. As a result, the accuracy of an attachment position of the object sensor apparatus S1 by the positioning projection 28 provided for the flange in the vicinity of the intermediate connection wall 26a is improved, and the support rigidity of the object sensor apparatus S1 is improved.

In addition, since the intermediate connection wall 26a and the second inner wall 23b 1 are coupled by the bridging rib 27a on the upper side, the rigidity in the periphery of the intermediate connection wall 26a is enhanced, and the accuracy of the attachment position and the support rigidity with respect to the object sensor apparatus S1 are further effectively enhanced. Furthermore, since the vertical connection wall 26b and the second inner wall 23b1 are coupled by the plurality of bridging ribs 27a, the rigidity of the vertical connection wall 26b is enhanced, and the support rigidity of the intermediate connection wall 26a is enhanced, consequently the accuracy of the attachment position of the object sensor apparatus S 1 is enhanced.

The positioning projection 28 in the vicinity of the intermediate connection wall 26a is provided between the bridging rib 27a on the upper side and the bridging rib 27a on the lower side with respect to the vehicle up-down direction. As a result, deformation and displacement of the positioning projection 28 in the vicinity of the intermediate connection wall 26a are reduced. Moreover, the positioning projection 28 in the vicinity of the intermediate connection wall 26a is coupled to the first end wall 23a3 by a transverse rib 27c extending in the vehicle width direction. As a result, the rigidity of the positioning projection 28 is further enhanced, and the accuracy of the attachment position of the object sensor apparatus S 1 is further improved.

In addition, the bridging rib 27a on the lower side is connected to an apex part of a curve part that is curved to the high rigidity side (in the illustrated example, the left side) of the upper part of the vertical connection wall 26b. Furthermore, since the apex part and the second vehicle body coupling part 22 are coupled by a pillar rib 27d extending in the up-down direction, the rigidity of the vertical connection wall 26b is further effectively enhanced.

A plate insertion hole 23b5 is open in the vicinity of the positioning projection 28 on the second inner wall 23b1 of the second lateral part 23b (refer to Figure 5 and Figure 7). An end part of the sensor support plate is configured such that it can access the positioning projection 28 on the second end wall 23b3 side from the lower containing space V2 through the plate insertion hole 23b5.

In addition, a plate notch part 26b1 is formed in a front part of the vertical connection wall 26b. The plate notch part 26b1 is formed by being largely notched from the front end of the vertical connection wall 26b toward the rear. The end part of the sensor support plate is configured such that it can access the positioning projection 28 on the first end wall 23a3 side through the plate notch part 26b 1.

Furthermore, a harness drawing aperture (in other words, a harness insertion hole) for drawing out a wiring material such as a harness (cord-like body) to be electrically connected to the object sensor apparatus S1 is open in the sensor support plate. The wiring material (harness) is drawn out to the rear of the reinforcing member 20 through a large opening space formed by the first opening 25a, that is, a region surrounded by the intermediate connection wall 26a, the vertical connection wall 26b, and the first end wall 23a3, and wiring work may be easily performed.

### (Difference in Rigidity of Second Vehicle Body Coupling Part and Lower Support Part)

When referring to Figure 5 to Figure 8, in the portion of the bottom wall 23e that corresponds to the lower containing space V2, the bottom wall 23e is formed in a step shape that is bent in a step-wise manner in a lateral view. In detail, the bottom wall 23e is formed in a step shape in which the lower part of the bottom wall 23e is offset to the outer side of the vehicle (the front of the vehicle) with respect to the vehicle front-rear direction relative to the upper part of the bottom wall 23e. Furthermore, in the bottom wall 23e of the step shape, the upper part of the bottom wall 23e and the lower part of the bottom wall 23e are connected by a lower wall facing the downside. An engaging claw 29 is formed on a lower surface of the lower wall. The engaging claw 29 projects from the lower surface of the lower wall.

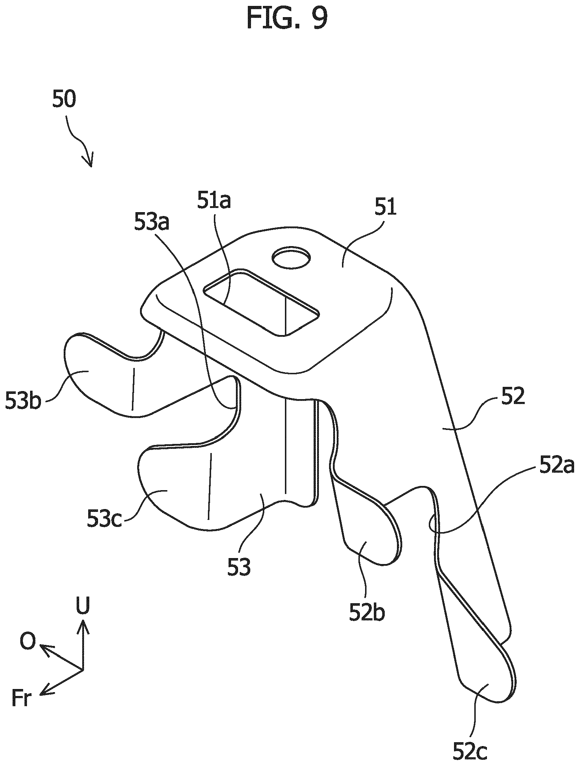

In the illustrated example, the lower wall of the bottom wall 23e having the step shape mentioned above constitutes the second vehicle body coupling part 22. When referring to Figure 2 and Figure 3, the lower wall as the second vehicle body coupling part 22 of the bottom wall 23e abuts on the upper surface of the lower support part 50. A lock hole 51a (refer to Figure 9, described later) is open on an upper wall 51, which will be described later, of the lower support part 50, and in a state in which the second vehicle body coupling part 22 (the lower wall) abuts on the upper surface of the upper wall 51, the engaging claw 29 is locked to the lock hole 51a. In this manner, the second vehicle body coupling part 22 in the lower part of the reinforcing member 20 is locked to the lower support part 50, and the second vehicle body coupling part 22 is coupled to (supported by) the second vehicle body structural member 32.

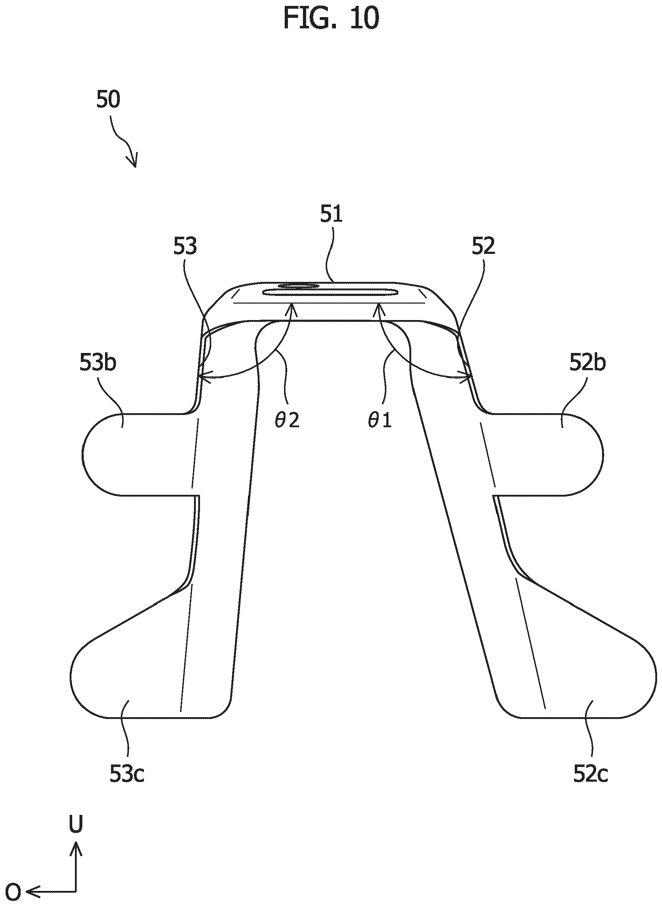

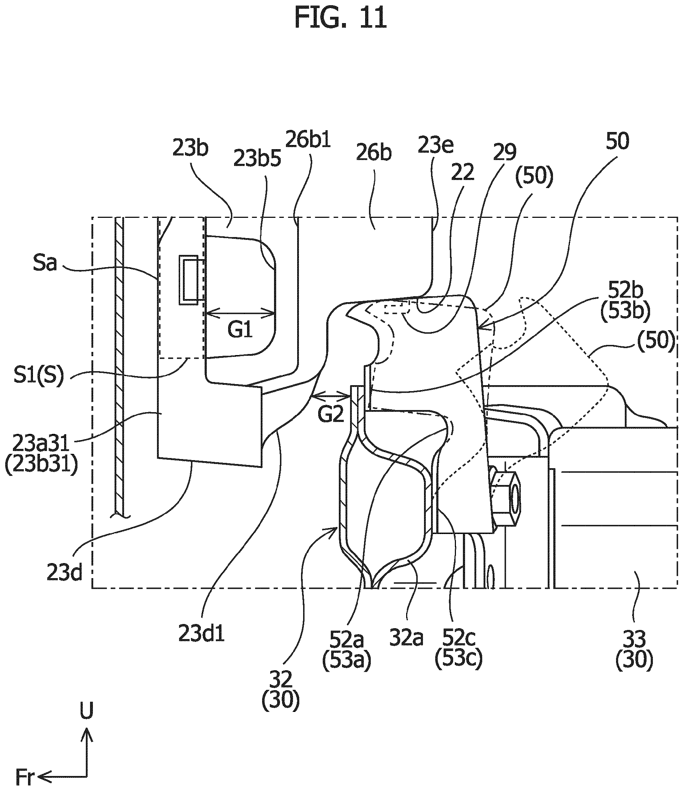

Figure 9 is a perspective view of the lower support part 50, Figure 10 is a plan view of the lower support part 50 seen from the front of the vehicle, and Figure 11 is an enlarged view of a C part illustrated in Figure 3. The lower support part 50 (lower bracket) is a portion that supports the second vehicle body coupling part 22 (the lower wall) in the lower part of the reinforcing member 20 from the downside, and that is coupled to the second vehicle body coupling part 22.

When referring to Figure 2, Figure 3, Figure 9, Figure 10, and Figure 11, the lower support part 50 has the upper wall 51, a first leg part 52, and a second leg part 53, and is a member made by bending a thin metal plate as mentioned above. Furthermore, in the present embodiment, the lower support part 50 is joined to the rear surface (back surface) of the second vehicle body structural member 32.

The upper wall 51 is coupled to the second vehicle body coupling part 22 in a state of being abutted on the lower surface of the second vehicle body coupling part 22 (the lower wall) in the lower part of the reinforcing member 20. The upper wall 51 is generally formed as a rectangular wall of about the same size as the second vehicle body coupling part 22 in a planar view. The lock hole 51a for locking the engaging claw 29 is formed on the upper wall 51.

The first leg part 52 and the second leg part 53 are joined to an upper part of the back surface of the second vehicle body structural member 32. The first leg part 52 extends obliquely to the downside from one end of the upper wall 51 in the vehicle width direction, and the second leg part 53 extends obliquely to the downside from the other end of the upper wall 51 in the vehicle width direction. The first leg part 52 and the second leg part 53 are inclined so as to be away from each other toward the downside. An upper side portion of the first leg part 52 and an upper side portion of the second leg part 53 each has a width of about the same size as the upper wall 51 with respect to the vehicle front-rear direction. A front edge of a lower side portion of the first leg part 52 retreats from a front edge of an upper side portion of the first leg part 52. Similarly, a front edge of a lower side portion of the second leg part 53 retreats from a front edge of an upper side portion of the second leg part 53. A first notch part 52a is formed in an upper part of the front edge of the lower side portion of the first leg part 52. Similarly, a second notch part 53a is formed in an upper part of the front edge of the lower side portion of the second leg part 53.

A first upper flange 52b and a first lower flange 52c are provided for the front edge of the first leg part 52, and a second upper flange 53b and a second lower flange 53c are provided for the front edge of the second leg part 53. The first upper flange 52b and the first lower flange 52c each extends from the front edge of the first leg part 52 to the outer side in the vehicle width direction outer side, and the second upper flange 53b and the second lower flange 53c each extends from the front edge of the second leg part 53 to the outer side in the vehicle width direction. The first upper flange 52b is provided for the upper side portion of the first leg part 52, the first lower flange 52c is provided for the lower side portion of the first leg part 52, the second upper flange 53b is provided for the upper side portion of the second leg part 53, and the second lower flange 53c is provided for the lower side portion of the second leg part 53. Each flange (52b, 52c, 53b, 53c) is joined to the upper part of the back surface of the second vehicle body structural member 32. Note that, when referring to Figure 11, the second vehicle body structural member 32 is made of two sheets of panels joined to each other, and in a cross-sectional view cut in the up-down direction, it has two closed cross-section parts 32a separated from each other. The first upper flange 52b and the second upper flange 53b are each joined to the back surface of an upper edge of the second vehicle body structural member 32, and the first lower flange 52c and the second lower flange 53c are each joined to the back surface of the closed cross-section part 32a on the upper side.

In the present embodiment, a difference in rigidity with respect to the vehicle width direction is imparted to the lower support part 50. That is to say, in the present embodiment, a difference in rigidity with respect to the vehicle width direction for the vehicle structure 1 is imparted not only to the reinforcing member 20 but also to the lower support part 50.

Specifically, in the illustrated example, as illustrated in Figure 10, in the lower support part 50, an interior angle θ1 formed by the first leg part 52 and the upper wall 51 (in other words, an inclination angle θ1 of the first leg part 52) is made larger than an interior angle θ2 formed by the second leg part 53 and the upper wall 51 (in other words, an inclination angle θ2 of the second leg part 53) (θ1>θ2). Accordingly, in the illustrated example, for example, on the point of support rigidity with respect to the up-down direction of the lower support part 50, the support rigidity on the first leg part 52 side which is steeply inclined is lower than the support rigidity on the second leg part 53 side which extends generally in the vertical direction. That is to say, the difference in rigidity with respect to the vehicle width direction of the lower support part 50 is imparted by providing a difference between the support rigidity in the up-down direction on the first leg part 52 side (one side of the vehicle width direction) and the support rigidity in the up-down direction on the second leg part 53 side (the other side of the vehicle width direction), in the lower support part 50. Moreover, the difference in rigidity with respect to the vehicle width direction of the lower support part 50 is imparted by varying the inclination angles (θ1, θ2) of the first leg part 52 and the second leg part 53. In this manner, in the lower support part 50, the rigidity against a load in the vehicle up-down direction varies mainly in the vehicle width direction. Accordingly, at the time of a front collision and the like, once external force toward the downside and the rear acts on the lower support part 50 through the second vehicle body coupling part 22 of the reinforcing member 20, deformation of a portion of the lower support part 50 on the first leg part 52 side is promoted, and deformation such as twisting of the lower support part 50 may be promoted.

In the present embodiment, the lower support part 50 is arranged on the high rigidity side with respect to the vehicle width direction in the reinforcing member 20. In other words, the lower support part 50 is arranged on the side in which the rigidity against a load in the vehicle front-rear direction is higher, with respect to the vehicle width direction in the reinforcing member 20. Specifically, when referring to Figure 2, the lower support part 50 is arranged on the high rigidity side (the second lateral part 23b side) of the reinforcing member 20 relative to a center line X in the vehicle width direction of the reinforcing member 20 (refer to Figure 2). Furthermore, in the lower containing space V2, the bottom wall 23e is unevenly arranged on the second lateral part 23b side, which is the high rigidity side. An end part of the second vehicle body coupling part 22 (the lower wall) on the first lateral part 23a side extends up to a position slightly exceeding the center line X to the first lateral part 23a side (low rigidity side), and a lower part of the vertical connection wall 26b also extends up to a position slightly exceeding the center line X to the first lateral part 23a side (the low rigidity side). Furthermore, when seen from the rear of the vehicle, the first leg part 52 is arranged on the first lateral part 23a side (the low rigidity side) relative to the center line X. In the illustrated example, when seen from the rear of the vehicle, the first leg part 52 is arranged so as to be smoothly continuous with the lower part of the vertical connection wall 26b.

A portion of external force (load) acting on the reinforcing member 20 at the time of a front collision and the like is transferred to the lower support part 50 through the second vehicle body coupling part 22 decentered to the high rigidity side. At this time, a portion of external force (load) input to the lower support part 50 may be dispersed and released to the right and left with the first leg part 52 which is the low rigidity side and the second leg part 53 which is the high rigidity side.

In this regard, when referring to Figure 11, the object sensor apparatus S1 is arranged on the upside relative to an upper end of the second vehicle body structural member 32. Furthermore, a gap G1 is provided between the rear surface of the object sensor apparatus S1 and the reinforcing member 20. In addition, a reinforcing rib 23d1 is provided on the back surface of the lower connection wall 23d of the reinforcing member 20. A rear edge of the reinforcing rib 23d1 is inclined so as to be away from the second vehicle body structural member 32 toward the downside. A gap G2 is provided between the upper end of the second vehicle body structural member 32 and the rear edge of the reinforcing rib 23d1.

### (Deformation Process)

Next, an example of an overview of a deformation process of the reinforcing member 20 and the lower support part 50 (lower bracket) when receiving external force will be described by referring to Figure 2, Figure 3, Figure 11, and the like.

For example, at the time of a front collision and the like, a load (impact load) due to external force acting on the outer panel 10 is likely to be input to the reinforcing member 20 from the front end of the reinforcing member 20. In the illustrated example, a front-end region of the reinforcing member 20 is the first lower lateral part 231 of the first lateral part 23a, the second lower lateral part 232 of the second lateral part 23b, and the lower connection wall 23d. Accordingly, when an impact load is input to the first lower lateral part 231, the second lower lateral part 232, and the lower connection wall 23d, at first, a portion on the first lower lateral part 231 side having low rigidity deforms so as to be displaced to the rear, and then the load starts to concentrate on a portion on the second lower lateral part 232 side having high rigidity, thereby enlarging (expanding) a deformation range to the high rigidity side. As a result, the whole reinforcing member 20 starts to twist. In this manner, once an impact load is input, the reinforcing member 20 deforms in two stages, which are local deformation on the low rigidity side and whole twist deformation, and impact energy is efficiently consumed and efficiently absorbed as deformation energy. Note that, when the portion on the first lower lateral part 231 side having low rigidity displaces to the rear at first, other portions of the containing part 23 having low rigidity against a load in the front-rear direction deform so as to follow the displacement of the first lower lateral part 231, thereby further promoting the displacement of the first lower lateral part 231.

Furthermore, the load started to concentrate on the high rigidity side of the reinforcing member 20 concentrates on the lower support part 50 (lower bracket) through the second vehicle body coupling part 22 arranged by also being shifted to the high rigidity side of the reinforcing member 20. As a result, the deformation of the lower support part 50 is effectively promoted.

Since a deformation allowance to the rear of the lower support part 50 is effectively expanded by the gap G2 between the lower part (the rear edge of the reinforcing rib 23d1) of the reinforcing member 20 and the upper end of the second vehicle body structural member 32, the impact energy is effectively absorbed also by the deformation of the lower support part 50. In addition, the twist deformation of the lower support part 50 is promoted by a difference in rigidity of the right and left of the lower support part 50 itself. Furthermore, since the upper flanges (52b, 53b) of the lower support part 50 are positioned at the front relative to the lower flanges (52c, 53c), the load concentrates on the upper flanges (52b, 53b) at first. As a result, as illustrated with a two-dot chain line in Figure 11, the upper flanges (52b, 53b) are detached from the second vehicle body structural member 32, and the deformation of the lower support part 50 is promoted. Then, once the upper side portion of the lower support part 50 further deforms to the rear, as illustrated with a broken line in Figure 11, the lower flanges (52c, 53c) also further deform while being detached from the second vehicle body structural member 32, and the impact energy is further effectively absorbed. Note that bending deformation to the rear with the notch parts (52a, 53a) being the starting point is also likely to occur in the lower support part 50.

In the vehicle structure 1 according to the present embodiment having configurations as above, in the reinforcing member 20, the rigidity against a load in the vehicle front-rear direction varies in the vehicle width direction, and a difference in rigidity mainly with respect to the vehicle width direction (a difference in rigidity against a load in the front-rear direction, with respect to the vehicle width direction) is imparted to the reinforcing member 20. Accordingly, when receiving external force, for example, the reinforcing member 20 is likely to deform in two stages which are the local deformation on the low rigidity side and the whole twist deformation, and the deformation range of the reinforcing member 20 is effectively enlarged and increased. As a result, the impact energy is efficiently used up as the deformation energy of the reinforcing member 20, and the impact energy is efficiently absorbed.

In this manner, the vehicle structure 1 according to the present embodiment is a vehicle structure having a structure capable of efficiently absorbing impact energy.

In the present embodiment, the difference in rigidity includes a difference in rigidity of the lateral parts, which is a difference between the rigidity of the first lateral part 23a which is one lateral part of the containing part 23 in the vehicle width direction and the rigidity of the second lateral part 23b which is the other lateral part of the containing part 23 in the vehicle width direction. A containing space for containing the sensor apparatus S is formed on the inner side of the containing part 23, and the containing part 23 is formed in a recessed shape that is recessed to the inner side and is a portion that is likely to deform. Accordingly, in the containing part 23 which is likely to deform, by imparting the difference in rigidity between the first lateral part 23a and the second lateral part 23b, deformation and displacement of the reinforcing member 20 are likely to be efficiently promoted.

In the present embodiment, the second vehicle body structural member 32 is provided at a position offset to the outer side of the vehicle with respect to the vehicle front-rear direction relative to the first vehicle body structural member 31, and the difference in rigidity of the lateral parts is imparted between the rigidity of the second vehicle body structural member-side portion (in the illustrated example, the first lower lateral part 231) of the first lateral part 23a and the rigidity of the second vehicle body structural member-side portion (in the illustrated example, the second lower lateral part 232) of the second lateral part 23b. Accordingly, in a region of the reinforcing member 20 in which an impact load is likely to be input (in the illustrated example, the first lower lateral part 231 and the second lower lateral part 232, in other words, a front-end lower part region of the reinforcing member 20), the deformation range of the reinforcing member 20 is easily enlarged, and absorption of the impact energy is effectively promoted.

In the present embodiment, the object sensor apparatus S1 is arranged inside the containing part 23 such that the sensor outer surface Sa is positioned on the same plane as the outer surfaces (23a31, 23b31) of the first lateral part 23a and the second lateral part 23b with respect to the vehicle front-rear direction. In this manner, protection of the object sensor apparatus S 1 is achieved. Specifically, when receiving external force, local transfer of the external force to the object sensor apparatus S1 is effectively reduced. Furthermore, the reinforcing member 20 deforms in a manner in which the object sensor apparatus S1 retreats to the inner side of the vehicle (in the illustrated example, the rear of the vehicle) so as to follow deformation of the lateral part on the low rigidity side (in the illustrated example, the first lateral part 23a), and protection of the object sensor apparatus S1 is achieved.

In the present embodiment, the long holes 24 are formed at positions that are offset relative to the object sensor apparatus S1 with respect to the vehicle up-down direction, on both the outer surface 23a31 of the first lateral part 23a and the outer surface 23b31 of the second lateral part 23b. In this manner, at the time of ordinary use, the support rigidity of the sensor apparatus S including the object sensor apparatus S1 is ensured, while when external force is input, deformation of a portion that is vertically away from the object sensor apparatus S1 of the first lateral part 23a and the second lateral part 23b may be promoted. In the illustrated example, the long holes 24 are open on the front surfaces (the outer surface 23a31 and the outer surface 23b31) of the first lateral part 23a and the second lateral part 23b in the inclined widened part of the containing part 23. Accordingly, a projected area of the front surfaces (the outer surface 23a31 and the outer surface 23b31) to the outer panel 10 (that is, an external force input area) will be increased, and when receiving external force, the reinforcing member 20 may be easily deformed in the front-rear direction and the like. In addition, by forming the long holes 24 which are vertically long, twist deformation is likely to be promoted.

In the present embodiment, on the bottom wall 23e of the containing part 23, the opening 25a (the first opening 25a) is formed in the region which is positioned between the second vehicle body structural member-side portion (the first lower lateral part 231) of the first lateral part 23a and the second vehicle body structural member-side portion (the second lower lateral part 232) of the second lateral part 23b with respect to the vehicle up-down direction and which is shifted to the first lateral part 23a side, which is the low rigidity side, with respect to the vehicle width direction, and the difference in rigidity with respect to the vehicle width direction imparted to the reinforcing member 20 includes the difference in rigidity of the bottom wall, which is caused due to the formation of the first opening 25a on the bottom wall 23e of the containing part 23. With the difference in rigidity of the bottom wall, deformation of a portion on the first lateral part 23a side in the reinforcing member 20 is effectively promoted, and at the time of deformation of the reinforcing member 20, damage to the sensor apparatus S such as the object sensor apparatus S1 due to contact with the bottom wall 23e is reduced, and protection of the sensor apparatus S is further effectively achieved. In the illustrated example, since the second opening 25b is open at the center in the vehicle width direction, in the portion of the bottom wall 23e that corresponds to the upper containing space V1, deformation and displacement of the reinforcing member 20 are further effectively promoted.

In the present embodiment, the reinforcing member 20 has the intermediate connection wall 26a positioned on the upside of the object sensor apparatus S1, which connects the bottom wall 23e and the upper part of the second vehicle body structural member-side portion of the first lateral part 23a. In this manner, the rigidity in the periphery of the first opening 25a is improved, and the support rigidity of the object sensor apparatus S1 at the time of ordinary use is easily ensured. In addition, in the illustrated example, since the bridging rib 27a connects (links) the vertical connection wall 26b continuous from the intermediate connection wall 26a and the second lateral part 23b on the high rigidity side, the support rigidity of the object sensor apparatus S1 at the time of ordinary use is improved. The support rigidity of the object sensor apparatus S1 at the time of ordinary use is improved also by the grid structure part 27b connected to the vertical connection wall 26b.

In the present embodiment, the second vehicle body structural member 32 is provided on the downside relative to the first vehicle body structural member 31, and the second vehicle body structural member 32 is provided with the lower support part 50 projecting to the upside from the second vehicle body structural member 32 and supporting the lower part of the reinforcing member 20 from the downside. A difference in rigidity with respect to the vehicle width direction is imparted to the lower support part 50. In this manner, also for the lower support part 50 itself, deformation due to the difference in rigidity is promoted, and impact energy is absorbed also by the deformation of the lower support part 50. Note that, when receiving external force, the lower support part 50 is unlikely to undergo tension against the external force because of the deformation of the lower support part 50. As a result, the external force is likely to concentrate on the reinforcing member 20, and the deformation of the reinforcing member 20 is promoted.

In the present embodiment, since the lower support part 50 is arranged on the high rigidity side with respect to the vehicle width direction in the reinforcing member 20, when receiving external force, a load started to concentrate on the high rigidity side of the reinforcing member 20 effectively concentrates on the lower support part 50 (lower bracket). As a result, the deformation of the lower support part 50 is effectively promoted.

In the present embodiment, in a predetermined range (in the illustrated example, the first lower lateral part 231 and the second lower lateral part 232) with respect to the vehicle up-down direction of the containing part 23, a length (thickness) of the first lateral part 23a of the containing part 23 in the vehicle front-rear direction is made shorter than a length of the second lateral part 23b of the containing part 23 in the vehicle front-rear direction. As a result, at the time of front collision and the like, in the reinforcing member 20, deformation is likely to be made so as to follow the deformation on the low rigidity side (the first lower lateral part 231 side), and the deformation and the displacement of the reinforcing member 20 are effectively promoted.

In the present embodiment, the difference in rigidity is imparted not only to the reinforcing member 20, but also to the lower support part 50. At the time of a front collision and the like, with twist deformation of the lower support part 50, twist deformation of the reinforcing member 20 is further effectively promoted.

Although embodiments of the present disclosure have been described above, the present disclosure is not limited to the embodiments mentioned above, and further modification or alteration can be made based on the technical concept of the present disclosure.

For example, in the present embodiment, in the reinforcing member 20, the difference in rigidity of the lateral parts is imparted by varying the lengths (thicknesses) of the first lower lateral part 231 and the second lower lateral part 232 in the front-rear direction. However, not limited to this, it may be imparted by varying the sizes of the holes. That is to say, in a predetermined range (for example, the first lower lateral part 231 and the second lower lateral part 232) of the containing part 23 of the reinforcing member 20 in the vehicle up-down direction, a through hole such as the long hole 24 is formed in each of the first lateral part 23a (first lower lateral part 231) and the second lateral part 23b (second lower lateral part 232), and the through hole of the first lateral part 23a is open to be larger than the through hole of the second lateral part 23b.

In addition, the first inner wall 23a1 and the first outer wall 23a2 may be provided in the first lower lateral part 231 which is the low rigidity side, and the second outer wall 23b2 may be provided in the second lower lateral part 232. In this case, in the reinforcing member 20, for example, (1) the through hole may be formed on at least one of the first inner wall 23a1 and the first outer wall 23a2 in the first lower lateral part 231, (2) the length (thickness) in the front-rear direction of at least either of the first inner wall 23a1 and the first outer wall 23a2 in the first lower lateral part 231 may be set to be shorter (thinner) than the length (thickness) in the front-rear direction of the second inner wall 23b1 and the second outer wall 23b2 in the second lower lateral part 232, (3) a fragile part may be formed on at least one of the first inner wall 23a1 and the first outer wall 23a2 in the first lower lateral part 231, or (4) the above-mentioned (1) to (3) may be combined and applied to the reinforcing member 20. These points may also be used to impart the difference in rigidity of the lateral parts between the rigidity of the first lower lateral part 231 of the first lateral part 23a and the rigidity of the second lower lateral part 232 of the second lateral part 23b.

In the reinforcing member 20, the difference in rigidity includes the difference in rigidity of the lateral parts and the difference in rigidity of the bottom wall, but are not limited to these, the difference in rigidity only has to include one of the difference in rigidity of the lateral parts and the difference in rigidity of the bottom wall. In addition, although the difference in rigidity is imparted to both the reinforcing member 20 and the lower support part 50, the present disclosure is not limited to this. The difference in rigidity may be imparted only to the reinforcing member 20, or may be imparted only to the lower support part 50. Even when the difference in rigidity is imparted only to the lower support part 50, at the time of front collision and the like, twist deformation and displacement of the reinforcing member 20 are promoted with twist deformation and displacement of the lower support part 50. That is to say, if the difference in rigidity is not imparted to the lower support part 50, it becomes difficult for the reinforcing member 20 to be twisted, but by imparting the difference in rigidity to the lower support part 50, twisting of the reinforcing member 20 to which the difference in rigidity with respect to the vehicle width direction is not imparted becomes easy due to twist deformation of the lower support part 50, and a deformation range may be expanded in the reinforcing member 20.

In addition, the difference in rigidity with respect to the vehicle width direction of the lower support part 50 is imparted by varying the inclination angles (the interior angle θ1 and the interior angle θ2) of the first leg part 52 and the second leg part 53, but the present disclosure is not limited to this. Although not illustrated, for example, (1) a through hole may be formed in each of the first leg part 52 and the second leg part 53, and the through hole of the first leg part 52 which is the low rigidity side may be formed to be smaller than the through hole of the second leg part 53 which is the high rigidity side, or (2) a through hole may be formed only in the first leg part 52 which is the low rigidity side.

In addition, in the present embodiment, in a state in which the reinforcing member 20 is seen from the front side of the vehicle to the rear side of the vehicle (front view), the first lateral part 23a which has a lower rigidity than the second lateral part 23b is provided on the right side, and the second lateral part 23b which has a higher rigidity than the first lateral part 23a is provided on the left side, but the present disclosure is not limited to this. The first lateral part 23a which has a low rigidity may be provided on the left side, and the second lateral part 23b which has a high rigidity may be provided on the right side. In this case, in a front view, the first opening 25a is shifted to the left side on the bottom wall 23e, and in the lower support part 50, the first leg part 52 is provided on the left side and the second leg part 53 is provided on the right side.

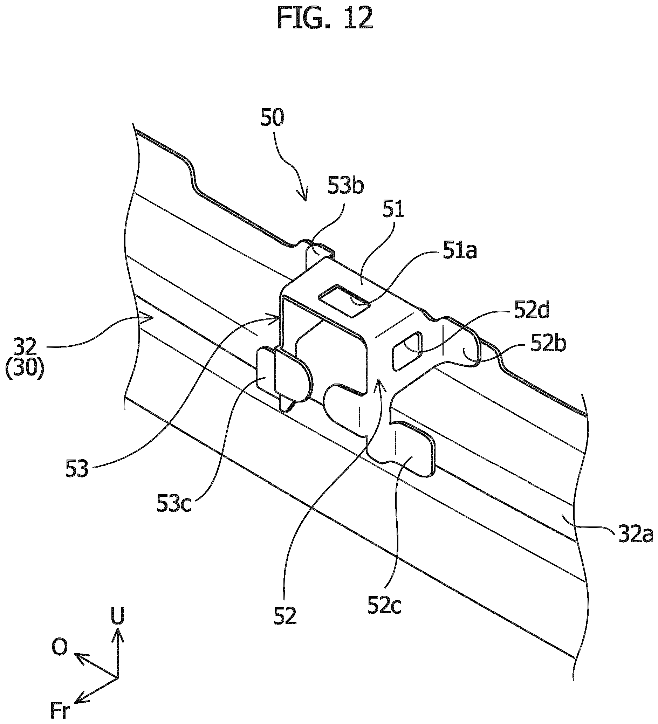

In the present embodiment, the lower support part 50 is joined to the rear surface (back surface) of the second vehicle body structural member 32, but it is not limited to this, as illustrated in Figure 12, it may be joined to the front surface (frontal surface) of the second vehicle body structural member 32. In this manner, at the time of a front collision and the like, compressive deformation of the lower support part 50 is likely to be promoted. In addition, when referring to Figure 12, in the lower support part 50 according to a modification, the first leg part 52 and the second leg part 53 extend to the downside without inclination and are joined to the upper part of the front surface of the second vehicle body structural member 32. Each flange (52b, 52c, 53b, 53c) is provided at the rear edge of the corresponding leg part (52, 53), the flange (52b, 53b) on the upper side is joined to the front surface of the upper edge of the second vehicle body structural member 32, and the flange (52c, 53c) on the lower side is joined to the front surface of the closed cross-section part 32a on the upper side. In the lower support part 50 illustrated in Figure 12, the first leg part 52 and the second leg part 53 extend to the downside without inclination, and a through hole 52d is formed only in the first leg part 52. In this manner, the rigidity of the first leg part 52 against a load in the up-down direction and a load in the front-rear direction is made lower than the rigidity of the second leg part 53 against the load in the up-down direction and the load in the front-rear direction. That is to say, in the lower support part 50 illustrated in Figure 12, the difference in rigidity with respect to the vehicle width direction of the lower support part 50 is imparted by forming the through hole 52d only in the first leg part 52.

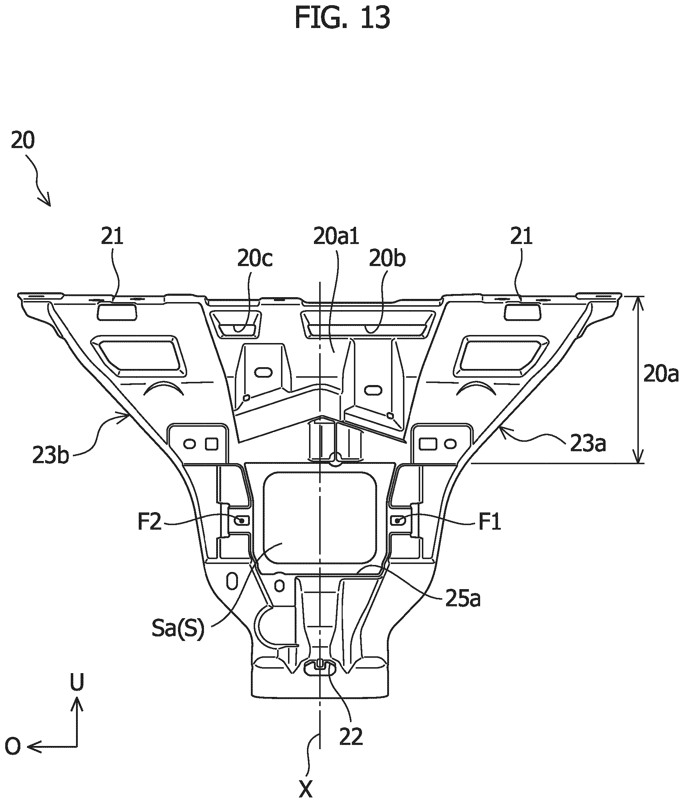

In the present embodiment, in the reinforcing member 20, a predetermined range with respect to the vehicle up-down direction in the reinforcing member 20 to which the difference in rigidity is imparted is set to the lower part (in the illustrated example, the portions corresponding to the first lower lateral part 231 and the second lower lateral part 232, and the portion corresponding to the lower containing space V2) of the reinforcing member 20, but the present disclosure is not limited to this. An imparting range of the difference in rigidity is set to an appropriate range with respect to the vehicle up-down direction, and the difference in rigidity may be imparted, for example, to the upper part of the reinforcing member 20. Figure 13 illustrates an example of a case in which the difference in rigidity is imparted to the upper part of the reinforcing member 20. Specifically, in the reinforcing member 20 illustrated in Figure 13, the containing part 23 which contains the sensor apparatus S is gathered in the lower part of the reinforcing member 20, and a large portion of the upper part (generally, upper half) of the reinforcing member 20 is formed as a rearward rising inclination part 20a, and the difference in rigidity is imparted to this inclination part 20a. In detail, in the example of Figure 13, the first opening 25a penetrates through the reinforcing member 20 as a rectangular hole of a size that is slightly larger than the outer shape of the sensor apparatus S in the containing part 23, and the sensor apparatus S is arranged on the inner side of the first opening 25a. Furthermore, in the example of Figure 13, in an upper part of a center inclination part positioned at the center side (center line X side) in the vehicle width direction of the inclination part 20a, a first upper through hole 20b is formed on the first lateral part 23a side, and a second upper through hole 20c is formed on the second lateral part 23b side. The first upper through hole 20b and the second upper through hole 20c each penetrates through the reinforcing member 20 in the vehicle front-rear direction. Furthermore, an opening width of the first upper through hole 20b with respect to the vehicle width direction is set remarkably wider (larger) than an opening width of the second upper through hole 20c with respect to the vehicle width direction. As a result, in the upper part of the reinforcing member 20, a rigidity of a portion on the first lateral part 23a side in the inclination part 20a against a load in the vehicle front-rear direction is lower than a rigidity of a portion on the second lateral part 23b side in the inclination part 20a against the load in the vehicle front-rear direction. In this manner, in the reinforcing member 20 illustrated in Figure 13, the difference in rigidity is imparted to the upper part of the reinforcing member 20.

In addition, the reinforcing member 20 is generally formed in an inverted trapezoid-like outer shape in which the upper base is longer than the lower base, but not limited to this, it may be in a trapezoid-like outer shape in which the upper base is shorter than the lower base, or it may be in a triangle-like outer shape that is convex upward. In these cases, for example, the first vehicle body structural member 31 and the second vehicle body structural member 32 are vertically switched. The object sensor apparatus S1 is contained inside the containing part 23 in the upper part of the reinforcing member 20. Furthermore, the widened part of the containing part 23 widens in the vehicle width direction toward the upside at a position downside relative to the object sensor apparatus S1. In addition, the long hole 24 is provided for both the first lateral part 23a and the second lateral part 23b in the widened part, but not limited to this, it may be provided for either of those parts. In addition, on the outer surface 23a31 of the first lateral part 23a and the outer surface 23b31 of the second lateral part 23b, a plurality of square holes or a plurality of round holes may be formed instead of the long holes 24.

In addition, the object sensor apparatus S1 is arranged inside the containing part 23 such that the sensor outer surface Sa is positioned on the same plane as the outer surfaces (23a31, 23b31) of the first lateral part 23a and the second lateral part 23b with respect to the vehicle front-rear direction, but the present disclosure is not limited to this. The object sensor apparatus S 1 may be arranged inside the containing part 23 such that the sensor outer surface Sa is positioned on the inner side of the vehicle (the rear of the vehicle) relative to the outer surfaces (23a31, 23b31) with respect to the vehicle front-rear direction.

Furthermore, the outer panel 10 is a front bumper having a front grille, but the present disclosure is not limited to this. The outer panel 10 may be, for example, a front bumper not having a front grille, a single body of a front grille, or a decorative member (for example, a metallic-appearing member).

Each bracket (the upper support part 40 and the lower support part 50) is formed as a body separate from the vehicle body structural member 30, but it is not limited to this, it may be formed integrally with the vehicle body structural member 30 and constitute a portion of the vehicle body structural member 30.

The sensor apparatus S is not limited to a radar using a millimeter wave or a microwave, and it only has to be an apparatus that senses an exterior environment of a vehicle. It may be an ultrasonic wave sensor that senses an exterior environment of a vehicle by using an ultrasonic wave, or it may be an imaging apparatus such as a camera that senses an exterior environment of a vehicle by imaging.

In the present embodiment, the vehicle structure 1 is applied as a front part structure of a vehicle, but the present disclosure is not limited to this. Not limited to a front part of a vehicle, the sensor apparatus S may also be attached to a rear part of the vehicle or a lateral part of the vehicle, and the vehicle structure 1 may be applied as a rear part structure of the vehicle or a lateral part structure of the vehicle. In the case of the rear part structure, the outer panel 10 is, for example, a rear bumper, a rear grille, a back panel, a rear door panel, or the like, and in the case of the lateral part structure, the outer panel 10 is, for example, a side panel or a side door panel.

### [Reference Signs List]

1 Vehicle structure
20 Reinforcing member
23 Containing part
23a First lateral part
23a31 Outer surface
23b Second lateral part
23b31 Outer surface
231 First lower lateral part (second vehicle body structural member-side portion of the first lateral part)
232 Second lower lateral part (second vehicle body structural member-side portion of the second lateral part)
23e Bottom wall
24 Long hole
25a First opening (opening)
26a Intermediate connection wall
30 Vehicle body structural member
31 First vehicle body structural member
32 Second vehicle body structural member
50 Lower support part
S Sensor apparatus
Sa Sensor outer surface
S1 Object sensor apparatus

## Claims

1. A vehicle structure, comprising:
a reinforcing member supported by a first vehicle body structural member and a second vehicle body structural member separated from each other in a vehicle up-down direction in a front part or a rear part of a vehicle; and
a sensor apparatus attached to the reinforcing member,
**characterized in that**
a difference in rigidity with respect to a vehicle width direction is imparted to the reinforcing member.

2. The vehicle structure according to claim 1, wherein
the reinforcing member has a containing part which is recessed to an inner side of the vehicle with respect to a vehicle front-rear direction and contains the sensor apparatus, and
the difference in rigidity includes a difference in rigidity of lateral parts, which is a difference between a rigidity of a first lateral part which is one lateral part of the containing part in the vehicle width direction and a rigidity of a second lateral part which is the other lateral part of the containing part in the vehicle width direction.

3. The vehicle structure according to claim 2, wherein
the second vehicle body structural member is provided at a position offset to an outer side of the vehicle with respect to the vehicle front-rear direction relative to the first vehicle body structural member, and
the difference in rigidity of the lateral parts is imparted between a rigidity of a second vehicle body structural member-side portion of the first lateral part and a rigidity of a second vehicle body structural member-side portion of the second lateral part.

4. The vehicle structure according to claim 3, wherein
the first lateral part and the second lateral part each has an outer surface facing the outer side of the vehicle with respect to the vehicle front-rear direction,
the sensor apparatus includes an object sensor apparatus arranged between the second vehicle body structural member-side portion of the first lateral part and the second vehicle body structural member-side portion of the second lateral part,
the object sensor apparatus has a sensor outer surface facing the outer side of the vehicle with respect to the vehicle front-rear direction, and
the object sensor apparatus is arranged inside the containing part such that the sensor outer surface is positioned on the same plane as the outer surface with respect to the vehicle front-rear direction or is positioned on the inner side of the vehicle relative to the outer surface with respect to the vehicle front-rear direction.

5. The vehicle structure according to claim 4, wherein in at least one of the outer surface of the first lateral part and the outer surface of the second lateral part, a long hole which is vertically long is formed at a position offset relative to the object sensor apparatus with respect to the vehicle up-down direction.

6. The vehicle structure according to any one of claims 3 to 5, wherein
the containing part has a bottom wall which forms a bottom of a recess with respect to the vehicle front-rear direction in the containing part,
the second vehicle body structural member-side portion of the first lateral part is formed to have a lower rigidity than the second vehicle body structural member-side portion of the second lateral part,
on the bottom wall, an opening is formed in a region that is positioned between the second vehicle body structural member-side portion of the first lateral part and the second vehicle body structural member-side portion of the second lateral part with respect to the vehicle up-down direction and that is shifted to the first lateral part side with respect to the vehicle width direction, and
the difference in rigidity includes a difference in rigidity of the bottom wall caused by formation of the opening on the bottom wall.

7. The vehicle structure according to claim 6, wherein the reinforcing member has an intermediate connection wall which is positioned on an upside of the object sensor apparatus and connects the bottom wall and an upper part of the second vehicle body structural member-side portion of the first lateral part.

8. The vehicle structure according to claim 1, wherein
the second vehicle body structural member is provided on a downside relative to the first vehicle body structural member,
the second vehicle body structural member is provided with a lower support part which projects to an upside from the second vehicle body structural member and supports a lower part of the reinforcing member from the downside, and
the difference in rigidity with respect to the vehicle width direction is imparted to the lower support part.

9. The vehicle structure according to claim 8, wherein the lower support part is arranged on a high rigidity side with respect to the vehicle width direction in the reinforcing member.

10. A vehicle structure comprising:
a reinforcing member supported by a first vehicle body structural member and a second vehicle body structural member separated from each other in a vehicle up-down direction in a front part or a rear part of a vehicle; and
a sensor apparatus attached to the reinforcing member,
**characterized in that**
the reinforcing member has a containing part which is recessed to an inner side of the vehicle with respect to a vehicle front-rear direction and contains the sensor apparatus, and
in a predetermined range with respect to the vehicle up-down direction of the containing part, a length in the vehicle front-rear direction of a first lateral part which is one lateral part of the containing part in a vehicle width direction is shorter than a length in the vehicle front-rear direction of a second lateral part which is the other lateral part of the containing part in the vehicle width direction.

11. A vehicle structure comprising:
a reinforcing member supported by a first vehicle body structural member and a second vehicle body structural member separated from each other in a vehicle up-down direction in a front part or a rear part of a vehicle; and
a sensor apparatus attached to the reinforcing member,
**characterized in that**
the reinforcing member has a containing part which is recessed to an inner side of the vehicle with respect to a vehicle front-rear direction and contains the sensor apparatus,
in a predetermined range with respect to the vehicle up-down direction of the containing part, a through hole is formed in each of a first lateral part which is one lateral part of the containing part in a vehicle width direction and a second lateral part which is the other lateral part of the containing part in the vehicle width direction, and
the through hole of the first lateral part is open larger than the through hole of the second lateral part.

12. A vehicle structure comprising:
a reinforcing member supported by a first vehicle body structural member and a second vehicle body structural member separated from each other in a vehicle up-down direction in a front part or a rear part of a vehicle; and
a sensor apparatus attached to the reinforcing member,
**characterized in that**
the second vehicle body structural member is provided on a downside relative to the first vehicle body structural member,
the second vehicle body structural member is provided with a lower support part which projects to an upside from the second vehicle body structural member and supports a lower part of the reinforcing member from the downside, and
a difference in rigidity with respect to a vehicle width direction is imparted to the lower support part.
